# EUROPÄISCHE PATENTSCHRIFT

(11) **EP 0 755 336 B1**
(45) Veröffentlichungstag und Bekanntmachung des Hinweises auf die Patenterteilung: **26.05.1999**
(21) Anmeldenummer: 95911206.1
(22) Anmeldetag: 28.02.1995
(51) Int. Cl.: B44C 1/14, B44C 3/08, B41M 1/24, B41M 1/22

(54) **VERFAHREN ZUM VORZUGSWEISE BEREICHSWEISEN BESCHICHTEN EINER TRANSPARENTEN TRÄGERPLATTE**
PROCESS FOR COATING A TRANSPARENT SUBSTRATE, PREFERABLY IN REGIONS
PROCEDE D'APPLICATION, DE PREFERENCE PAR ZONES, SUR UNE PLAQUE-SUPPORT TRANSPARENTE

(30) Priorität: 14.04.1994 DE 4412876
(43) Veröffentlichungstag der Anmeldung: 29.01.1997
(73) Patentinhaber: FRITZ BORSI KG, D-77746 Schutterwald (DE)
(72) Erfinder: KALL, Klaus, D-77656 Offenburg (DE)
(74) Vertreter: Goddar, Heinz J., Dr.
(86) Internationale Anmeldenummer: DE9500290
(87) Internationale Veröffentlichungsnummer: WO9528290

(56) Entgegenhaltungen:
- EP-A- 0 068 608
- EP-A- 0 215 324
- DE-C- 3 808 689
- DE-C- 4 224 463

## Beschreibung

Die Erfindung betrifft ein Verfahren zum Beschichten einer transparenten, gegebenenfalls aus klarem Acrylglas oder dergleichen bestehenden Trägerplatte mit einer metallischen Prägefolienbeschichtung gemäß dem Oberbegriff von Anspruch 1.

Aus der DE-PS 42 24 463 ist ein Verfahren der vorstehend beschriebenen Art bekannt, bei dem zumindest in einem bestimmten Bereich der Trägerplatte eine Farbschicht aus mindestens einer den an sich durch die Prägefolie bewirkten Farbton der Beschichtung in einen anderen Farbton umwandelnden Farbe angeordnet wird. Handelt es sich bei der Prägefolie dabei beispielsweise um eine Silberfolie und wird für die Farbschicht eine gelbe Farbe verwendet, läßt sich hierdurch auf kostengünstige Weise eine Beschichtung mit einem Goldton erzielen.

Aus der DE-PS 38 08 689 ist ein Verfahren der eingangs genannten Art bekannt, bei dem im Unterschied zu dem Verfahren nach der DE-PS 42 24 463 die Farbe für die Farbschicht so gewählt wird, daß die mittels der Prägefolie bewirkte Farbgebung der Beschichtung unterstützt wird. Handelt es sich bei der Prägefolie dabei beispielsweise um eine Goldfolie, so läßt sich durch Verwendung einer gelben Farbschicht der Goldton intensivieren.

Das herkömmliche Verfahren, wie es aus den vorgenannten Druckschriften bekannt ist und für welches es charakteristisch ist, daß an die der Trägerplatte abgewandte Seite der metallischen Prägefolie keine weitere Farbschicht anschließt, hat sich durchaus bewährt. Allerdings hat es sich als wünschenswert herausgestellt, den erzielten Farbeindruck insbesondere in der Außenansicht (Draufsicht), bei der der Betrachter von der Trägerplattenseite aus die Beschichtung unter einer Beleuchtung erblickt, die ebenfalls von der Trägerplattenseite her kommt, noch weiter zu intensivieren.

Aus der EP-A-0 068 608 ist ein dekoratives Schichtmaterial bekannt, auf dessen Rückseite eine erste transparente Farbschicht, darauf wiederum eine Reflexionsschicht und abschließend auf der Reflexionsschicht eine weitere transparente Farbschicht aufgebracht ist, wobei das Schichtmaterial im wesentlichen opak ist, so daß ein unerwünschter Farbeindruck lediglich in Draufsicht mit einer ausgeglichenen Diffusion und einer spiegelnden Reflexion bewirkt wird. Diese Reflexionseigenschaften sind jedoch nicht für einen bestimmten Farbeindruck in Durchsicht geeignet.

Der Erfindung liegt daher die Aufgabe zugrunde, das bekannte Verfahren dahingehend weiterzubilden, daß der Farbeindruck der erzielten Beschichtung insbesondere in der Außenansicht, aber auch in der Durchsicht, weiter intensiviert wird, wobei auch stärkere Farbnuancierungen unter Verwendung ein und derselben Prägefolie möglich sein sollen.

Erfindungsgemäß wird diese Aufgabe durch ein Verfahren nach Anspruch 1 gelöst.

Dabei kann vorgesehen sein, daß für die erste und die zweite Farbschicht übereinstimmende Farben verwendet werden.

Die Erfindung sieht auch vor, daß für die erste und die zweite Farbschicht unterschiedliche Farben verwendet werden.

Nach der Erfindung kann auch vorgesehen sein, daß die Farben für die erste und die zweite Farbschicht so gewählt werden, daß der an sich durch die Prägefolie bewirkte Farbton der Beschichtung unterstützt wird.

Es kann auch vorgesehen sein, daß für die erste und die zweite Farbschicht solche Farben gewählt werden, daß der an sich durch die Prägefolie bewirkte Farbton der Beschichtung in einen anderen Farbton umgewandelt wird.

Schließlich kann erfindungsgemäß auch vorgesehen sein, daß die Farbgebung mindestens einer der Farbschichten über die Flächenerstreckung der Trägerplatte bereichsweise variiert wird.

Der Erfindung liegt die überraschende Erkenntnis zugrunde, daß es gelingt, einen wesentlich intensiveren Farbeindruck zu erzielen, insbesondere in der Außenansicht, wenn die metallische Prägefolie beidseitig in je eine Farbschicht eingebettet wird. Haben die beiden Farbschichten dabei eine identische Farbe, läßt sich der durch die metallische Prägefolie vermittelte Farbeindruck besonders intensiv verstärken. Dies gelingt insbesondere also dann, wenn beispielsweise eine Goldfolie beidseits in eine gelbe Farbschicht eingebettet wird. Andererseits gelingt es auch, überraschende Farbnuancen zu erzielen, indem für beide Farbschichten unterschiedliche Farbtöne gewählt werden. Durch über die Trägerplatte bereichsweise Variation der Farbgebung der Farbschichten, zumindest einer derselben, ggf. auch lediglich hinsichtlich der Intensität der betreffenden Farbgebungen, lassen sich weitere überraschend wirksame Effekte erzielen, die insbesondere bei Verwendung für Werbedisplays und dergleichen, wie dies in der DE-PS 38 08 689 im einzelnen beschrieben ist, von besonderem Vorteil sind.

Weitere Merkmale und Vorteile der Erfindung ergeben sich aus der nachstehenden Beschreibung, in der ein Ausführungsbeispiel anhand der schematischen Zeichnung im einzelnen erläutert ist.

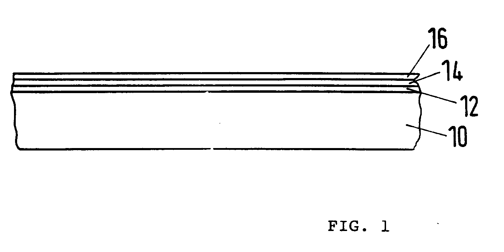

Dabei zeigt die aus einer einzigen Figur bestehende Zeichnung eine nach einem Ausführungsbeispiel des Verfahrens nach der Erfindung hergestellte Trägerplatte im Schnitt senkrecht zur Trägerplattenebene.

Wie die Zeichnung erkennen läßt, trägt eine vorzugsweise aus klarem Acrylglas bestehende Trägerplatte 10 auf ihrer, vom Betrachter her gesehen, Rückseite eine gelbe Farbschicht 12, die im Siebdruckverfahren aufgebracht worden ist, sowie im Anschluß hieran eine Gold-Prägefolienbeschichtung 14, die im Rollenprägeverfahren auf die mit der Farbschicht 14 versehene Trägerplatte 10 aufgebracht worden ist. Auf die der ersten Farbschicht 12 abgewandte Seite der Prägefolienbeschichtung 14 ist eine zweite Farbschicht 16, ebenfalls gelb, im Siebdruckverfahren aufgebracht worden.

Bei Betrachtung und Beleuchtung von der unbeschichteten Seite der Trägerplatte 10 her erzeugt die Gesamtbeschichtung einen intensiven Goldeindruck.

Natürlich kann beim erfindungsgemäßen Verfahren auch so vorgegangen werden, daß zumindest eine der Farbschichten 12, 16 nicht im Siebdruckverfahren aufgebracht wird.

Beispielsweise kann es sich bei der ersten Farbschicht 12 um eine Farblackschicht, z. B. wiederum in gelber oder aber auch in roter Farbe oder dergleichen, handeln, während dann z. B. ausschließlich die zweite Farbschicht 16 im Siebdruckverfahren aufgebracht wäre.

## Patentansprüche

1. Verfahren zum Beschichten einer transparenten, gegebenenfalls aus klarem Acrylglas oder dergleichen bestehenden Trägerplatte mit einer metallischen, im wesentlichen nicht opaken Prägefolienbeschichtung, bei dem auf einer Seite der Trägerplatte vorzugsweise bereichsweise eine erste Farbschicht und im Rollenprägeverfahren an die erste Farbschicht angrenzend, bereichsweise, auf die die erste Farbschicht tragende Seite der Trägerplatte eine metallische Prägefolie aufgebracht wird, dadurch gekennzeichnet, daß an die Prägefolie angrenzend, auf der der ersten Farbschicht abgewandten Seite derselben, eine zweite Farbschicht vorzugsweise bereichsweise aufgebracht wird, wobei die erste Farbschicht, die Prägefolie und die zweite Farbschicht sich zumindest teilweise überlappend angeordnet werden, so daß die Prägefolie zumindest bereichsweise zwischen der ersten Farbschicht und der zweiten Farbschicht eingebettet ist.

2. Verfahren nach Anspruch 1, dadurch gekennzeichnet, daß für die erste und die zweite Farbschicht übereinstimmende Farben verwendet werden.

3. Verfahren nach Anspruch 1, dadurch gekennzeichnet, daß für die erste und die zweite Farbschicht unterschiedliche Farben verwendet werden.

4. Verfahren nach einem der vorangehenden Ansprüche, dadurch gekennzeichnet, daß die Farben für die erste und die zweite Farbschicht so gewählt werden, daß der an sich durch die Prägefolie bewirkte Farbton der Beschichtung unterstützt wird.

5. Verfahren nach einem der Ansprüche 1 bis 3, dadurch gekennzeichnet, daß für die erste und die zweite Farbschicht solche Farben gewählt werden, daß der an sich durch die Prägefolie bewirkte Farbton der Beschichtung in einen anderen Farbton umgewandelt wird.

6. Verfahren nach einem der vorangehenden Ansprüche, dadurch gekennzeichnet, daß die Farbgebung mindestens einer der Farbschichten über die Flächenerstreckung der Trägerplatte bereichsweise variiert wird.

## Claims

1. A method of coating a transparent substrate, which may if required consist of clear acrylic glass or the like, with a metallic and substantially non-opaque blocking foil coating, wherein a first coloured coating is applied to one side of the substrate, preferably zone-wise, and a metallic blocking foil is applied by the roller blocking process zone-wise, adjoining the first coating, on that side of the substrate which carries the first coloured coating, characterised in that adjoining the blocking foil and on the side thereof remote from the first coloured coating, a second coloured coating is applied, preferably zone-wise, the first coloured coating, the blocking foil and the second coloured coating being at least partially arranged in overlapping relationship so that the blocking foil is embedded, at least zone-wise, between the first coloured coating and the second coloured coating.

2. A method according to claim 1, characterised in that corresponding colours are used for the first and second coloured coatings.

3. A method according to claim 1, characterised in that different colours are used for the first and second coloured coatings.

4. A method according to any one of the preceding claims, characterised in that the colours for the first coloured coating and the second coloured coating are so selected that the shade of the coating produced per se by the blocking foil is enhanced.

5. A method according to any one of claims 1 to 3, characterised in that the colours selected for the first and second coloured coatings are such that the shade of the coating produced per se by the blocking foil is converted into a different shade.

6. A method according to any one of the preceding claims, characterised in that the coloration of at least one of the coloured coatings is varied zone-wise over the surface extent of the substrate.

## Revendications

1. Procédé destiné à l'application d'un revêtement par feuille métallique estampée sensiblement non opaque sur une plaque de support transparente, constituée le cas échéant de verre acrylique clair ou analogue, selon lequel une première couche de couleur est appliquée sur une face de la plaque de support, de préférence par zones et, de façon adjacente à la première couche de couleur, une feuille métallique estampée est appliquée par zones par un procédé d'estampage au rouleau sur la face portant la première couche de couleur, caractérisé en ce que, de façon adjacente à la feuille estampée, on applique une deuxième couche de couleur sur la face opposée à la première couche de couleur, de préférence par zones, la première couche de couleur, la feuille estampée et la deuxième couche de couleur, étant disposées de façon à se chevaucher, au moins partiellement, de sorte que la feuille estampée soit insérée, au moins par zones, entre les première et deuxième couches de couleur.

2. Procédé selon la revendication 1, caractérisé en ce que des couleurs concordantes sont utilisées pour les première et deuxième couches de couleur.

3. Procédé selon la revendication 1, caractérisé en ce que des couleurs différentes sont utilisées pour les première et deuxième couches de couleur.

4. Procédé selon l'une quelconque des revendications précédentes, caractérisé en ce que les couleurs des première et deuxième couches de couleur sont choisies de telle sorte que la teinte du revêtement obtenue par la feuille estampée soit intensifiée.

5. Procédé selon l'une quelconque des revendications 1 à 3, caractérisé en ce que les couleurs choisies pour les première et deuxième couches de couleur sont telles que la teinte du revêtement obtenue par la feuille estampée soit modifiée en une autre teinte.

6. Procédé selon l'une quelconque des revendications précédentes, caractérisé en ce que la coloration de l'une au moins des couches de couleur est variée par zones sur l'extension en surface de la plaque de support.
